# EUROPEAN PATENT APPLICATION

(11) **EP 3 103 911 A1**
(43) Date of publication of application: **14.12.2016**
(21) Application number: 14881316.5
(22) Date of filing: 31.12.2014
(51) Int. Cl.: D06F 39/02

(54) **OPENING AND CLOSING STRUCTURE, COMPONENT HAVING OPENING AND CLOSING STRUCTURE AND WASHING MACHINE HAVING COMPONENT**

(30) Priority: 29.01.2014 JP 2014014722
(71) Applicant: Haier Asia International Co., Ltd., Osaka-shi, Osaka 532-0003 (JP); Qingdao Haier Washing Machine Co., Ltd., Laoshan District Qingdao, Shandong 266101 (CN)
(72) Inventor: KATSUKI, Jungo, Osaka 532-0003 (JP); KAWAKAMI, Takeshi, Osaka 532-0003 (JP); OE, Katzumi, Osaka 532-0003 (JP); YONEZAWA, Takaaki, Osaka 532-0003 (JP)
(74) Representative: Pfenning, Meinig & Partner mbB
(86) International application number: PCT/CN2014/095738
(87) International publication number: WO 2015/113448

(57) **Abstract**

Provided are an opening and closing structure (1) capable of preventing a lid (4) from being damaged, a component having the opening and closing structure (1), and a washing machine having the component. The opening and closing structure (1) capable of preventing a lid from being damaged includes: a supporting body (3) formed with an opening part (6); and the lid (4) supported by the supporting body (3) in a free rotation manner so as to enable the opening part (6) to open and close. An elastic deformation part (14) forming a rotation center and a periphery of the lid (4) has flexibility. One of the supporting body (3) and the elastic deformation part (14) is provided with a shaft (15) forming the rotation center of the lid (4), and the other is provided with a hole (10) insertable by the shaft (15). One of the supporting body (3) and the elastic deformation part (14) is provided with a pin (16), and the other is provided with a recess (11) receivable to the pin (16) with a clearance during opening and closing of the lid (4). The recess (11) gradually becomes shallower as the lid (4) goes from an open position to an opposite side of a closed position, so as to push the pin (16) out.

## Description

### TECHNICAL FIELD

The present disclosure relates to an opening and closing structure, a component having the opening and closing structure, and a washing machine having the component.

### Background

A washing machine disclosed in patent document 1 below includes a detergent feeding pipeline installed on an inner circumferential face of a laundry dewatering tank. The detergent feeding pipeline has a detergent feeding port at an upper portion, and the detergent feeding port is opened and closed by a lid. The lid rotates in such a way that it is turned to an inner side of the laundry dewatering tank, thereby opening the detergent feeding port.

### Prior art document

### Patent document

Patent document 1: Japanese Patent Laid-Open No. 2007-44229

### Summary

In patent document 1, when such a force is applied to further open the lid in a fully open state, it may be necessary to replace the lid since a rotation shaft of the lid is broken off so that the lid is damaged.

The present disclosure is made in consideration of this circumstance, and it is an object thereof to provide an opening and closing structure capable of preventing a lid from being damaged, a component having the opening and closing structure, and a washing machine having the component.

The present disclosure relates to an opening and closing structure, including: a supporting body, which is formed with an opening part; a lid, which is supported by the supporting body in a free rotation manner, and is capable of being opened and closed between an open position at which the opening part is opened and a closed position at which the opening part is closed; an elastic deformation part, which forms a rotation center and a periphery of the lid and has flexibility; a shaft, which is provided on one of the supporting body and the elastic deformation part, and is formed as the rotation center of the lid; a hole, which is provided on the other of the supporting body and the elastic deformation part which is not provided with the shaft, and is insertable by the shaft; a pin, which is provided on one of the supporting body and the elastic deformation part; and a recess, which is provided on the other of the supporting body and the elastic deformation part which is not provided with the pin, and is receivable to the pin with a clearance during opening and closing of the lid, where the recess gradually becomes shallower as the lid goes from the open position to an opposite side of the closed position, so as to push the pin out.

Furthermore, the opening and closing structure of the present disclosure includes a slit, which is formed at the lid and is configured to bend the elastic deformation part.

In addition, the present disclosure relates to a component, including the opening and closing structure.

Moreover, the present disclosure relates to a washing machine, including the component, where the opening part is a feeding port for feeding any of detergent, softener and bleach.

According to the present disclosure, the elastic deformation part forming the rotation center and the periphery of the lid which is supported by the supporting body in a free rotation manner has flexibility. The shaft provided on one of the supporting body and the elastic deformation part is inserted into the hole provided on the other of the supporting body and the elastic deformation part which is not provided with the shaft. The lid rotates with the shaft as a center in a state that the shaft is inserted into the hole, so as to be capable of being opened and closed between the open position at which the opening part of the supporting body is opened and the closed position at which the opening part is closed.

The pin provided on either of the supporting body and the elastic deformation part can be received by the recess provided on the other of the supporting body and the elastic deformation part which is not provided with the pin. The recess receives the pin with a clearance during opening and closing of the lid. Thus, during opening and closing of the lid, smooth opening and closing of the lid would not be hindered since the pin does not interfere with a wall face of the recess.

When the lid between a fully open position and the open position rotates in such a way that it goes from the open position to an opposite side of the closed position, the pin is pushed out of the recess by means of a bottom face of the recess gradually shallower toward the opposite side. Consequently, the shaft is naturally pulled out of the hole since the elastic deformation part having flexibility bends and is separated from the supporting body. Therefore, even if it is intended to further open the fully opened lid, the lid can be prevented from being damaged since the shaft is not broken.

Furthermore, according to the present disclosure, in the case of intending to further open the fully opened lid, the elastic deformation part further bends by means of the slit formed in the lid, so that the lid can be reliably prevented from being damaged since the shaft can be reliably pulled out of the hole.

Furthermore, according to the present disclosure, in the component including the above opening and closing structure, the lid can be prevented from being damaged.

Furthermore, according to the present disclosure, in the washing machine including the above component, the lid can be prevented from being damaged.

### Description of Drawings

Fig. 1 is a stereogram representing a component 2 including an opening and closing structure 1 of an embodiment of the present disclosure;
Fig. 2 is an stereo exploded view representing the component 2;
Fig. 3 is a top sectional view representing the component 2 when the lid 4 is in a closed position;
Fig. 4 is a top sectional view representing the component 2 when the lid 4 is in an open position;

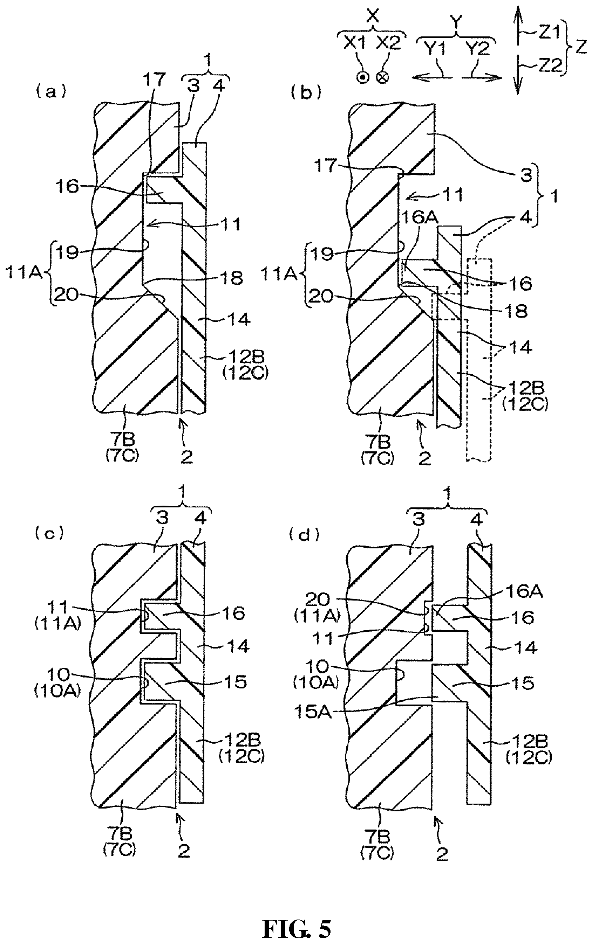

Fig. 5(a) is a schematic sectional view seen at a position in the component 2 where overall recess 11 can be seen when the lid 4 is in the closed position, Fig. 5(b) is a schematic sectional view seen at a position in the component 2 where overall recess 11 can be seen when the lid 4 is in the open position, Fig. 5(c) is a schematic sectional view seen at a position in the component 2 where both a hole 10 and a recess 11 can be seen when the lid 4 is in the closed position, and Fig. 5(d) is a schematic sectional view seen at a position in the component 2 where both the hole 10 and the recess 11 can be seen when the lid 4 is further opened from the open position;
Fig. 6 is a view representing that a first variant embodiment is applied on Fig. 5;
Fig. 7 is a view representing that a second variant embodiment is applied on Fig. 5;
Fig. 8 is a view representing that a third variant embodiment is applied on Fig. 5;
Fig. 9 is a stereogram representing the lid 4 in a fourth variant embodiment;
Fig. 10 is a schematic view representing part of an internal structure of a washing machine 50 as an example of a device including the component 2 in section.

### Detailed description of the Embodiments

Embodiments of the present disclosure are described in detail below with reference to accompanying drawings.

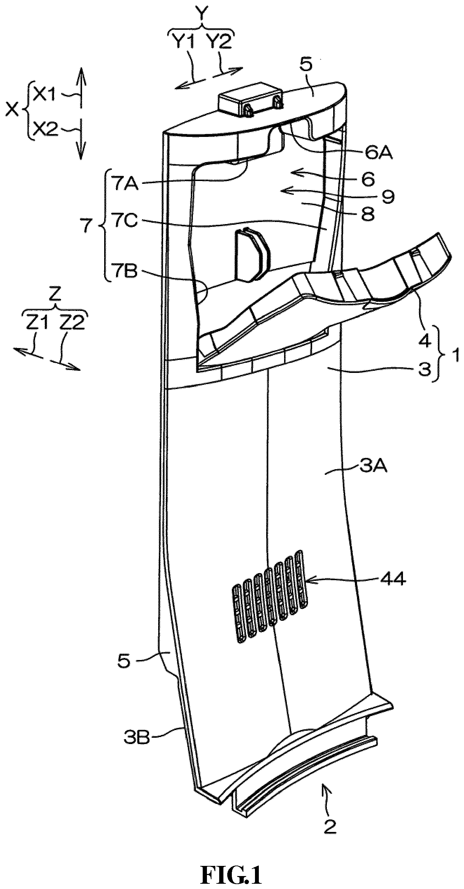

Fig. 1 is a stereogram representing a component 2 including an opening and closing structure 1 of an embodiment of the present disclosure.

Fig. 1 represents an actual posture of the component 2 in a state that it is assembled on another device, and is described below by taking an up-down direction X and a left-right direction Y in Fig. 1 as benchmarks. In the up-down direction X, an upward direction is referred as an upward direction X1, and a downward direction is referred as a downward direction X2. In the left-right direction Y, a leftward direction is referred as a leftward direction Y1, and a rightward direction is referred as a rightward direction Y2.

The component 2 including the opening and closing structure 1 is made of resin, and has a long dimension in the up-down direction X. The opening and closing structure 1 includes a supporting body 3 and a lid 4.

The supporting body 3 is plate-shaped and has a long dimension in the up-down direction X. In the supporting body 3, as can be seen in Fig. 1, a largest face is a surface 3A of the supporting body 3, and a face on an opposite side of the surface 3A is a back face 3B of the supporting body 3. The surface 3A and the back face 3B may be flat faces respectively, and can also partially include curved faces. A direction from the surface 3A to the back face 3B is referred as a far side Z1, and a direction from the back face 3B to the surface 3A is referred as a near side Z2. The far side Z1 and the near side Z2 are collectively referred as a depth direction Z. An upper end portion and both left and right end portions of the supporting body 3 are flange portions 5 bent toward the far side Z1.

An upper end portion of the surface 3A of the supporting body 3 is formed with an opening part 6, which is formed in a substantially rectangular shape, and approximately occupies a region as one-third of an upper side of the upper surface 3A. A central portion 6A in the left-right direction Y of an upper edge of the opening part 6 protrudes towards the upward direction X1 to form a convex. The supporting body 3 has side walls 7 extending from edges of the opening part 6, other than a lower edge of the opening part 6, to the far side Z1. The side walls 7 include: an upper side wall 7A for trimming the upper edge of the opening part 6 and extending in the left-right direction Y; a left side wall 7B for trimming a left edge of the opening part 6 and extending in the up-down direction X; and a right side wall 7C for trimming a right edge of the opening part 6 and extending in the up-down direction X. The left side wall 7B and the right side wall 7C are oppositely disposed at an interval in the left-right direction Y, and the upper side wall 7A is erected between upper edges of the left side wall 7B and the right side wall 7C.

The supporting body 3 includes a bottom wall 8 expanding in the up-down direction X and the left-right direction Y. The bottom wall 8 is approximately erected within a region between middle and upper sides at two-thirds of end portions of the left side wall 7B and the right side wall 7C on the far side Z1, and is also connected to an end portion of the upper side wall 7A on the far side Z1. By means of the side walls 7 and the bottom wall 8, a recess 9 recessed from the opening part 6 to the far side Z1 is formed in the supporting body 3. A bottom of the recess 9 is closed by the bottom wall 8 in a region of approximately two-thirds of an upper side, and is opened approximately in a region of one-third of an lower side.

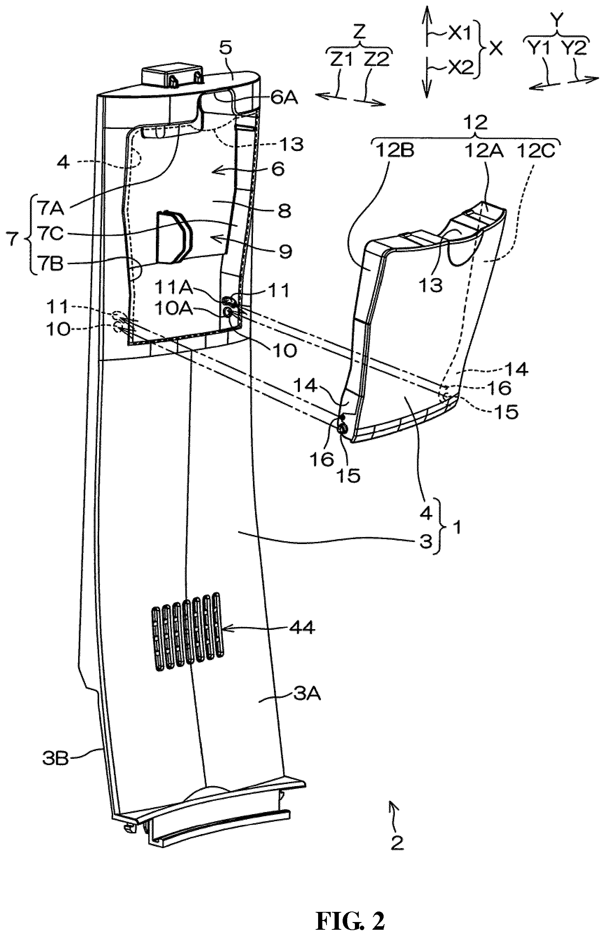

Fig. 2 is an stereo exploded view representing the component 2.

Referring to Fig. 2, lower end portions of opposite faces of the left side wall 7B and the right side wall 7C are respectively provided with a hole 10 and a recess 11. The holes 10 of the left side wall 7B and the right side wall 7C are respectively located in same positions in the up-down direction X and the depth direction Z. The recesses 11 of the left side wall 7B and the right side wall 7C are respectively located in same positions in the up-down direction X and the depth direction Z. Circular holes 10 are respectively formed in the left side wall 7B and the right side wall 7C, and as an example, the recess 11 is formed towards the upward direction X1 and in shape of a convex arc by taking a circle center of the hole 10 as a center of curvature. As an example, the hole 10 is a recess having a bottom face 10A, and may also be a through hole penetrating through the side wall 7. The recess 11 is a recess having a bottom face 11A rather than a through hole.

The lid 4, as viewed from the near side Z2, is formed in a substantially rectangular shape for closing the opening part 6. Taking a posture of Fig. 2 as a benchmark, the lid 4 has side walls 12 extending from edges, other than a lower edge, to the far side Z1. The side walls 12 include: an upper side wall 12A for trimming an upper edge of the lid 4 and extending in the left-right direction Y; a left side wall 12B for trimming a left edge of the lid 4 and extending in the up-down direction X; and a right side wall 12C for trimming a right edge of the lid 4 and extending in the up-down direction X. The left side wall 12B and the right side wall 12C are oppositely disposed at an interval in the left-right direction Y, and the upper side wall 12A is erected between upper edges of the left side wall 12B and the right side wall 12C. In a center of an upper surface of the upper side wall 12A in the left-right direction Y, an arc-shaped depression 13 is formed towards the downward direction X2. In the respective left side wall 12B and right side wall 12C, at least end portions thereof are formed as thin plate-shaped, so as to constitute an elastic deformation part 14 having flexibility in the left-right direction Y.

A left side face of the elastic deformation part 14 on the left side wall 12B and a right side face of the elastic deformation part 14 on the right side wall 12C are each provided with a shaft 15 and a pin 16. In the respective left side wall 12B and right side wall 12C, the pin 16 is in the shape of a cylinder with a diameter smaller than that of the shaft 15, and is disposed from the upward direction X1 relative to the shaft 15 in a mutually adjacent manner. A spacing between adjacent pin 16 and shaft 15 is substantially as same as a spacing between adjacent hole 10 and recess 11. The shaft 15 and the pin 16 of the left side wall 12B protrude from the left side face of the elastic deformation part 14 on the left side wall 12B to left side, and the shaft 15 and the pin 16 of the right side wall 12C protrude from the right side face of the elastic deformation part 14 on the right side wall 12C to right side.

The shaft 15 of the left side wall 12B is inserted from the rightward direction Y2 into the hole 10 of the left side wall 7B of the supporting body 3, and the shaft 15 of the right side wall 12C is inserted from the leftward direction Y1 into the hole 10 of the right side wall 7C of the supporting body 3. The pin 16 of the left side wall 12B is inserted from the rightward direction Y2 into the recess 11 of the left side wall 7B, and the pin 16 of the right side wall 12C is inserted from the leftward direction Y1 into the recess 11 of the right side wall 7C. Consequently, the lid 4 takes shafts 15 on left and right as a rotation center, and is supported by the supporting body 3 in a free rotation manner. The elastic deformation parts 14 provided with the shafts 15 respectively on the left side wall 12B and the right side wall 12C of the lid 4 constitutes the rotation center of the lid 4 and a periphery thereof. In addition, the recess 11 of each of the left side wall 7B and the right side wall 7C is formed in shape of an arc extending along as rotation trajectory of the lid 4. However, if each of the recesses 11 is a recess internally containing a movement trajectory of the pin 16 moving along the rotation trajectory of the lid 4, the recess 11, when viewed from a depth direction of the recess 11, may not be arc-shaped, for example, may be formed as a square.

As shown in dashed lines in Fig. 2, the lid 4 can be opened and closed by rotating between a closed position at which the opening part 6 of the supporting body 3 is closed and an open position inclined further towards the near side Z2 than the closed position at which the opening part 6 is opened to the near side Z2 (see Fig. 1). In the case of opening the lid 4 in the closed position, a user inserts a finger into a lower face of the central portion 6A of the upper edge of the opening part 6 of the supporting body 3, and the finger is hooked to the depression 13 of the upper side wall 12A of the lid 4 such that the lid 4 is pulled toward the near side Z2. When the lid 4 in the open position is rotated to the far side Z1, the lid 4 returns to the closed position. In other words, the far side Z1 is consistent with a closed position side, and the near side Z2 is consistent with an open position side.

During opening and closing of the lid 4, pins 16 on left and right are always received with a clearance by the recesses 11 on a same side of the supporting body 3 in the left-right direction Y. Therefore, during opening and closing of the lid 4, the pins 16 do not interfere with wall faces of the recesses 11, and thus smooth opening and closing of the lid 4 would not be hindered.

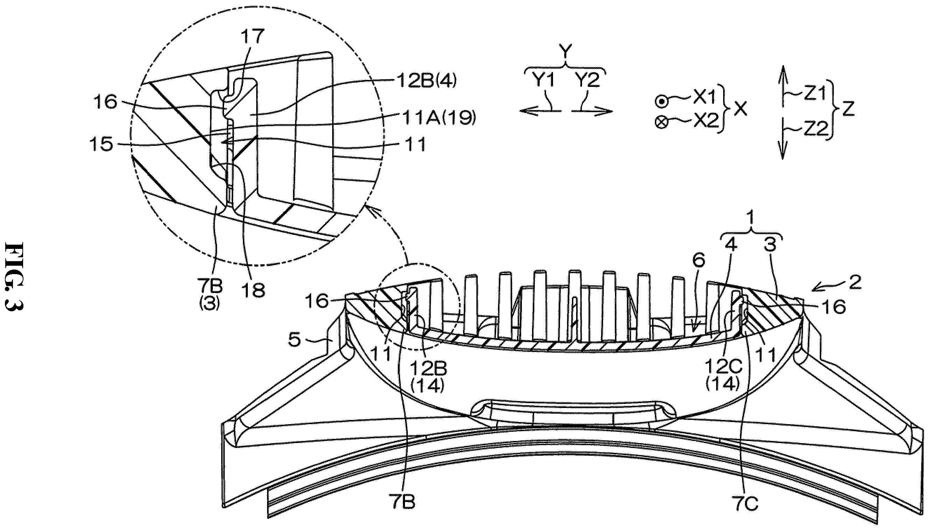

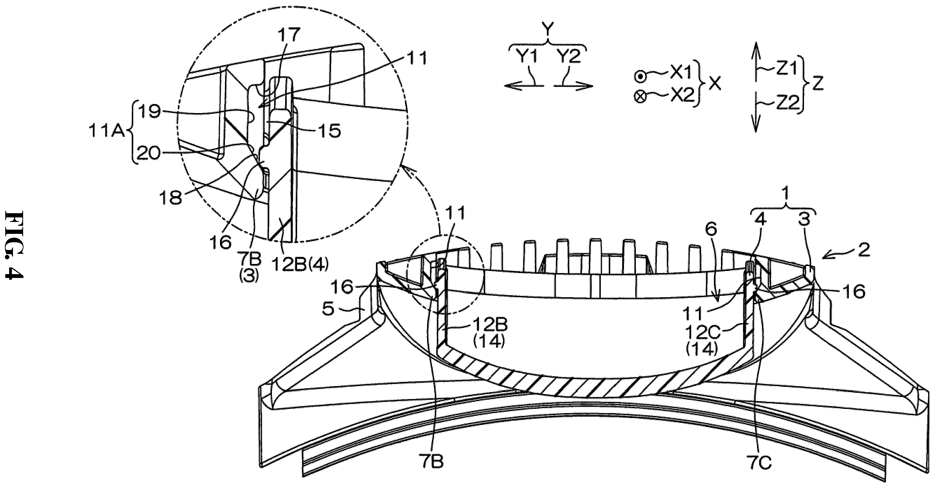

Fig. 3 is a top sectional view representing the component 2 when the lid 4 is in a closed position. Fig. 4 is a top sectional view representing the component 2 when the lid 4 is in an open position. Furthermore, Figs. 3 and 4 show parts surrounded by circles of doubled-dashed lines by zooming in. In addition, since positions of top sections in Figs. 3 and 4 are slightly different, shapes of details containing the recesses 11 are illustrated in slightly different ways.

As shown in Fig. 3, when the lid 4 is in the closed position, pins 16 on left and right are respectively located at far side end portions 17 as end portions of the recess 11 on the far side Z1. As shown in Fig. 4, when the lid 4 is in the open position, pins 16 on left and right are respectively located at near side end portions 18 as end portions of the recess 11 on the near side Z2. However, when the lid 4 is in the open position, compared with the pins 16 located at the near side end portions 18, the recesses 11 are also presented on the near side Z2.

Fig. 5(a) is a schematic sectional view seen at a position in the component 2 where overall recess 11 can be seen when the lid 4 is in the closed position. Fig. 5(b) is a schematic sectional view seen at a position in the component 2 where overall recess 11 can be seen when the lid 4 is in the open position. In other words, Figs. 5(a) and 5(b) illustrate sections along an arc of the recess 11.

Fig. 5(c) is a schematic sectional view seen at a position in the component 2 where both a hole 10 and a recess 11 can be seen when the lid 4 is in the closed position. Fig. 5(d) is a schematic sectional view seen at a position in the component 2 where both the hole 10 and the recess 11 can be seen when the lid 4 is further opened from the open position.

As shown in Figs. 5(a) and (b), a depth of the recess 11 of each of the left side wall 7B and the right side wall 7C of the supporting body 3 is constant between the far side end portion 17 and the near side end portion 18, and gradually becomes shallower from the near side end portion 18 to the near side Z2. Therefore, the bottom face 11A of the recess 11 includes: a flat face 19 which flatly extends in the depth direction Z between the far side end portion 17 and the near side end portion 18, and an inclining face 20 which is inclined continuously from the flat face 19 to the near side Z2. The inclining face 20 of the recess 11 of the left side wall 7B is inclined toward the near side Z2 and toward the rightward direction Y2, and the inclining face 20 of the recess 11 of the right side wall 7C is inclined toward the near side Z2 and toward the leftward direction Y1.

In the case that the lid 4 is in the open position and the closed position and therebetween, in each of the left side wall 7B and the right side wall 7C of the supporting body 3, the shafts 15 are respectively embedded into a bottom face 10A side of the holes 10, and the pins 16 are in a state that they are embedded into a bottom face 11A side of the recesses 11 (see Fig. 5(c)).

When the user pulls the lid 4 in the closed position toward the near side Z2 and makes the lid 4 rotate to the open position, as shown in solid lines in Fig. 5(b), in each of the left side wall 7B and the right side wall 7C, front end portions 16A of the pins 16 are respectively located in the near side end portions 18 of the recesses 11 and come into contact with the inclining faces 20 from the far side Z1. Consequently, the lid 4 can no longer be rotated from the open position to the near side Z2. Furthermore, for convenience of explanation, even in the case of making contact with the inclining faces 20, the pins 16 are also illustrated as slightly separated from the inclining faces 20.

Here, the lid 4 between a fully open position and the open position is rotated in such a way that it goes from the open position to an opposite side of the closed position by applying an excessive force on the lid 4 toward the near side Z2. As a condition that an excessive force is applied on the lid 4 toward the near side Z2, it is assumed that the user wrongly further opens the lid 4 in the open position, or a weight is unexpectedly placed on the lid 4 in the open position. When the lid 4 rotates toward the opposite side, as shown in dashed lines in Fig. 5(b), the pins 16 respectively moves toward the near side Z2 in each of the left side wall 12B and the right side wall 12C; at this time, the pins 16 are pushed out to outside of the recesses 11 by means of the inclining faces 20 of the bottom faces 11A of the recesses 11. In other words, the recess 11 gradually becomes shallower so as to push the pin 16 out as the lid 4 goes from the open position to the near side Z2 opposite to the closed position.

In response to the pins 16 being pushed out to the outside of the recesses 11, the elastic deformation part 14 provided with the pins 16 and having flexibility in the lid 4 bends, and is separated from the respective one of the left side wall 7B and the right side wall 7C. In other words, the elastic deformation part 14 provided with the left pin 16 bends so as to be separated from the left side wall 7B to the rightward direction Y2, and the elastic deformation part 14 provided with the right pin 16 bends so as to be separated from the right side wall 7C to the leftward direction Y1. Consequently, as shown in Fig. 5(d), the shaft 15 provided on the elastic deformation part 14 along with the pin 16 is naturally pulled out of the hole 10, and the lid 4 is naturally disengaged from the supporting body 3. Therefore, even if it is intended to further open the fully opened lid 4, the lid 4 can be prevented from being damaged in the component 2 including the opening and closing structure 1 since the shafts 15 would not be broken.

Furthermore, when the pins 16 are pushed to outside of the recesses 11 by means of the inclining faces 20, it is not necessary for the pins 16 to be wholly pushed to the outside of the recesses 11, and the front end portions 16A of the pins 16 may be in a state that they are embedded into the recesses 11. Similarly, when the pins 16 are pushed to the outside of the recesses 11 by means of the inclining faces 20, it is not necessary for the shafts 15 to be wholly pulled out of the holes 10, and a front end portions 15A of the shafts 15 may be in a state that they are embedded into the holes 10. If only a portion of the shaft 15 and the pin 16 is embedded in the hole 10 and the recess 11, the lid 4 then would be naturally disengaged from the supporting body 3 without damaging the shaft 15 and the pin 16.

In the above, the holes 10 and the recesses 11 are arranged in the supporting body 3, and the opening and closing structure 1 which is composed of the elastic deformation part 14 of the lid 4 provided with the shafts 15 and the pins 16 is described. It can be randomly selected to respectively arrange the holes 10, the recesses 11, the shafts 15 and the pins 16 on any of the supporting body 3 and the elastic deformation part 14. That is to say, as long as the shafts 15 are provided on one of the supporting body 3 and the elastic deformation part 14, the holes 10 are provided on the other of the supporting body 3 and the elastic deformation part 14 which is not provided with the shafts 15. Then, as long as the pins 16 are provided on one of the supporting body 3 and the elastic deformation part 14, the recesses 11 are provided on the other of the supporting body 3 and the elastic deformation part 14 which is not provided with the pins 16. Hereinafter, as other variant embodiments, a first variant embodiment to a third variant embodiment are enumerated.

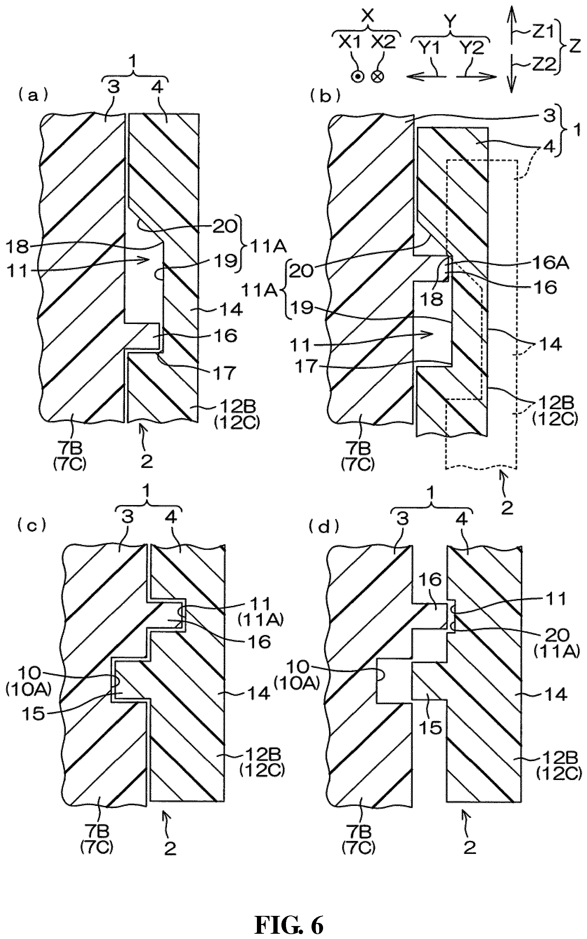

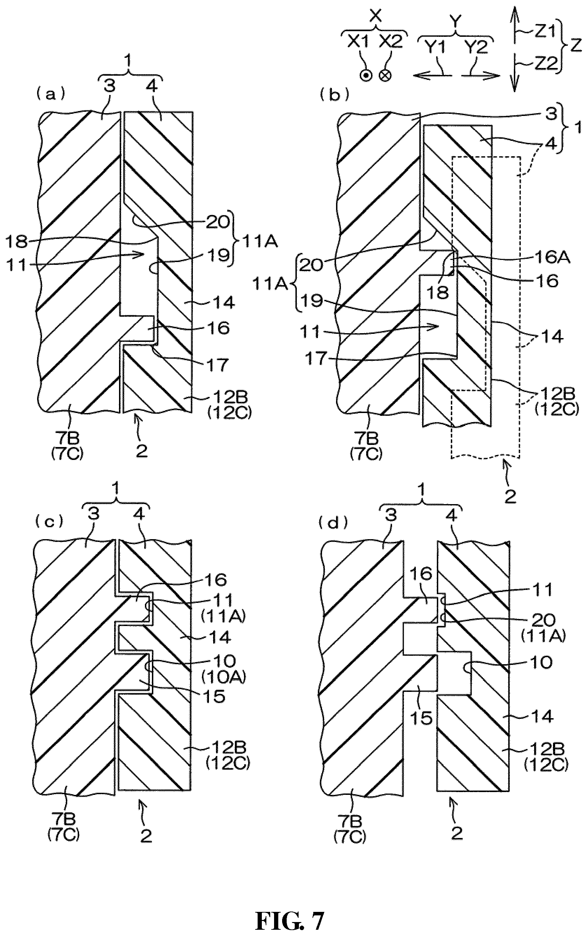

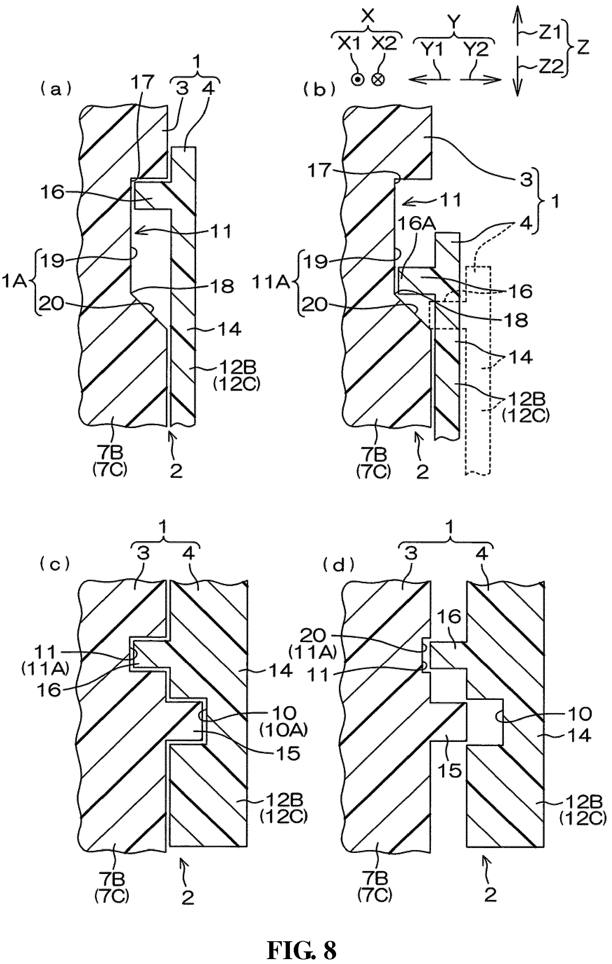

Fig. 6 is a view representing that a first variant embodiment is applied on Fig. 5. Fig. 7 is a view representing that a second variant embodiment is applied on Fig. 5. Fig. 8 is a view representing that a third variant embodiment is applied on Fig. 5. Fig. 6(a), Fig. 7(a) and Fig. 8(a) are equivalent to Fig. 5(a), and Fig 6(b), Fig. 7(b) and Fig 8(b) are equivalent to Fig. 5(b). Fig. 6(c), Fig. 7(c) and Fig. 8(c) are equivalent to Fig. 5(c), and Fig 6(d), Fig. 7(d) and Fig 8(d) are equivalent to Fig. 5(d).

In the case of the first variant embodiment as shown in Fig. 6, the hole 10 and the pin 16 are provided on the supporting body 3, and the recess 11 and the shaft 15 are provided on the elastic deformation part 14 (see Fig. 6(c)). In the case that the recess 11 is provided on the elastic deformation part 14, the inclining face 20 is located closer to far side Z1 as compared with the flat face 19 in the bottom face 11A of the recess 11. When it is intended to further open the lid 4 in the open position toward the near side Z2, the pin 16 presses the inclining face 20 of the bottom face 11A of the recess 11, so that the elastic deformation part 14 bends (see the dashed part of Fig. 6(b)), and the shaft 15 is pulled out of the hole 10 as shown in Fig. 6(d).

In the case of the second variant embodiment as shown in Fig. 7, the shaft 15 and the pin 16 are provided on the supporting body 3, and the hole 10 and the recess 11 are provided on the elastic deformation part 14 (see Fig. 7(c)). When it is intended to further open the lid 4 in the open position toward the near side Z2, the pin 16 presses the inclining face 20 of the bottom face 11A of the recess 11, so that the elastic deformation part 14 bends (see the dashed part of Fig. 7(b)), and the shaft 15 is pulled out of the hole 10 as shown in Fig. 7(d).

In the case of the third variant embodiment as shown in Fig. 8, the recess 11 and the shaft 15 are provided on the supporting body 3, and the hole 10 and the pin 16 are provided on the elastic deformation part 14 (see Fig. 8(c)). When it is intended to further open the lid 4 in the open position toward the near side Z2, the pin 16 is pushed out to the outside of the recess 11 by means of the inclining face 20 of the bottom face 11A of the recess 11, so that the elastic deformation part 14 bends (see the dashed part of Fig. 8(b)), and the shaft 15 is pulled out of the hole 10 as shown in Fig. 8(d).

In addition, any one configuration of Figs. 5-8 can be commonly applied to both the left side wall 12B and the right side wall 12C of the lid 4. In other words, the configuration of the holes 10, recesses 11, the shafts 15 and the pins 16 of both the left side wall 12B and the right side wall 12C may also be shared in any of Figs. 5-8. Of course, it is also possible to apply any one configuration of Figs. 5-8 to one of the left side wall 12B and the right side wall 12C, and to apply a configuration of Figs. 5-8 different from the configuration applied to the one of the left side wall 12B and the right side wall 12C to the other thereof.

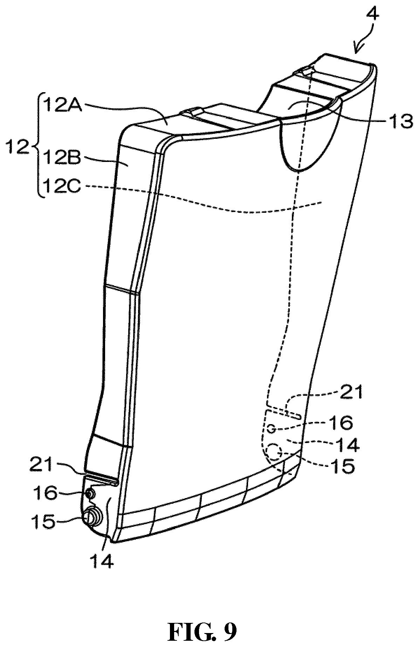

Fig. 9 is a stereogram representing the lid 4 in a fourth variant embodiment.

As shown in Fig. 9, in each of the left side wall 12B and the right side wall 12C of the lid 4, the elastic deformation part 14 and a boundary portion of an upper side portion of the elastic deformation part 14 may also respectively formed with a slit 21. The slit 21 can cut off the boundary portion, and may also be in shape of a groove formed at the surface of the boundary portion. By forming the slit 21, the elastic deformation part 14 is easier to bend. Consequently, in the case of intending to further open the fully opened lid 4, since the elastic deformation part 14 is further bent by the slit 21 formed in the lid 4, the shaft 15 can be reliably pulled out of the hole 10, thereby the lid 4 can be reliably prevented from being damaged.

In the above embodiments including the first to fourth variant embodiments, the shafts 15 and the pins 16 are disposed on both the left side wall 12B and the right side wall 12C of the lid 4; however, the shaft 15 and the pin 16 may be disposed only on either of the left side wall 12B and the right side wall 12C.

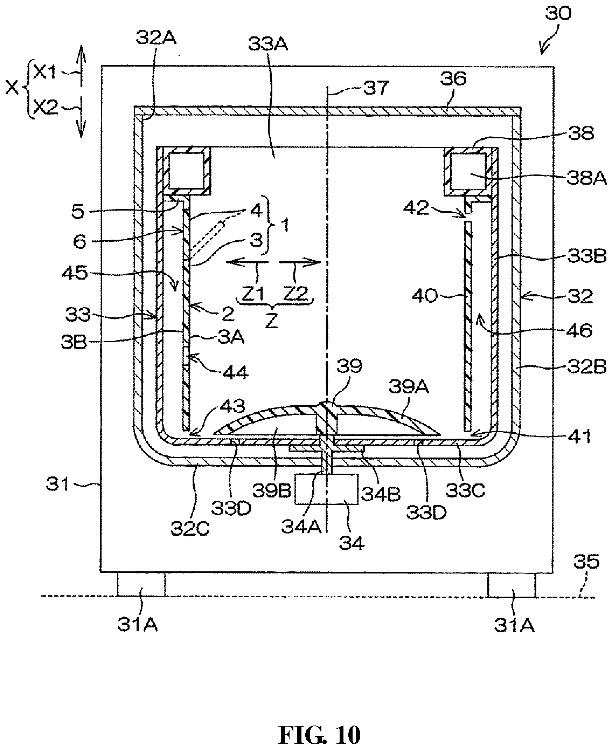

Next, a washing machine 30 as an example of a device including the above component 2 with the opening and closing structure 1 will be described with reference to Fig. 10. In the description of the washing machine 30, the up-down direction X and the depth direction Z are used. Furthermore, the washing machine 30 also includes a laundry dryer with a clothes drying function.

The washing machine 30 includes a housing 31, a water tank 32, a washing tank 33 and a motor 34.

The housing 31 is formed in a box shape. The housing 31 abuts against a floor 35 from top via legs 31A provided at a lower end thereof, so as to be disposed on the floor 35.

The water tank 32 is formed in a cylindrical shape with a bottom. The water tank 32 has: a circumferential wall 32B in a substantially cylindrical shape and having an opening part 32A at an upper end, and a bottom wall 32C in a circular plate shape for blocking a hollow portion of the circumferential wall 32B from the downward direction X2. The opening part 32A is opened and closed by a lid 36 connected to the circumferential wall 32B. Water such as tap water, bath water and a liquid dissolved with detergents are accumulated in the water tank 32.

The washing tank 33 is formed in a cylindrical shape with a bottom and is slightly smaller than the water tank 32. The washing tank 33 has: a circumferential wall 33B in a substantially cylindrical shape and having an access port 33A at an upper end, and a bottom wall 33C in a circular plate shape for blocking a hollow portion of the circumferential wall 33B from the downward direction X2. The washing tank 33 is coaxially housed within the water tank 32. The washing tank 33 housed within the water tank 32 can rotate with a central axis 37 as a center, which the central axis 37 extends in the up-down direction X as an axis of the washing tank 33. Consequently, the washing machine 30 is a vertical washing machine with a vertically arranged washing tank 33.

The access port 33A is in communication with the opening part 32A from the downward direction X2, and the opening part 32A and the access port 33A are both opened and closed by the lid 36. A user of the washing machine 50 can take/put laundry out of/into the washing tank 33 via the opened access port 33A. A through hole 33D is formed in the bottom wall 33C, and water in the water tank 32 can circulate between the water tank 32 and the washing tank 33 through the through hole 33D.

An annular balancer 38 is mounted at an upper end portion of an inner circumferential face of the circumferential wall 33B. The balancer 38 reduces vibration of the washing tank 33 during rotating, and a liquid for helping to reduce vibration is housed in a cavity 38A inside the balancer 38.

The motor 34 is disposed at the downward direction X2 of the bottom wall 32C of the water tank 32 in the housing 31. An output shaft 34A of the motor 34 extends toward the upward direction X1, and sequentially passes through a circle center of the bottom wall 32C and a circle center of the bottom wall 33C of the washing tank 33. The output shaft 34A has a flange portion 34B protruding in form of a flange between the bottom wall 32C and the bottom wall 33C, and is fixed to the bottom wall 33C via the flange portion 34B so as to be joined to the washing tank 33. The washing tank 33 rotates when driven by the motor 34.

A rotary wing 39 is mounted on an upper end portion of the output shaft 34A exposed toward the upward direction X1 further than the bottom wall 33C. The rotary wing 39 is a so-called impeller. The rotary wing 39 is formed in a disk shape, and the upper end portion of the output shaft 34A is mounted at a circle center thereof. An upper surface of the rotary wing 39 is provided with a plurality of stirring vanes 39A radially arranged, and a lower surface of the rotary wing 39 is provided with a plurality of pumping vanes 39B radially arranged. The rotary wing 39 rotates when driven by the motor 34, and laundry in the washing tank 33 is stirred by the stirring vanes 39A.

The inner circumferential face 33B of the circumferential wall 33B of the washing tank 33 is mounted with a pumping pipeline 40 and the component 2. The pumping pipeline 40 and the component 2 are arranged at an interval in a circumferential direction in the inner circumferential face of the circumferential wall 33B.

The pumping pipeline 40 is in a plate shape with a longer dimension in the up-down direction X, and is erected between the balancer 38 and the bottom wall 33C of the washing tank 33. A lower end of the pumping pipeline 40 is formed with an intake port 41, and an upper end of the pumping pipeline 40 is formed with a water spout 42. A pumping path 46 extending in the up-down direction X is defined between the pumping pipeline 40 and the inner circumferential face of the circumferential wall 33B. When the rotary wing 39 rotates, water accumulated in the washing tank 33 is pressed into the intake port 41 via the pumping vanes 39B of the rotary wing 39. The water pressed into the intake port 41 raises up in pumping path 46 and wets laundry in the washing tank 33 from the water spout 42. Consequently, washing can be performed with a small amount of water.

Like the pumping pipeline 40, the component 2 constitutes a detergent feeding pipeline which is erected between the balancer 38 and the bottom wall 33C of the washing tank 33. In the component 2, a lower end of the supporting body 3 is formed with a first opening 43, and a second opening 44 is formed at a location of the surface 3A of the supporting body 3, where the location is more close to the upward direction X1 than the first opening 43 and is more close to the downward direction X2 than the opening part 6 (also see Fig. 1). The component 2 defines a detergent supply path 45 extending in the up-down direction X between the inner circumferential face of the circumferential wall 33B and the back face 3B of the supporting body 3.

Prior to washing, the user pulls the lid 4 toward the near side Z2 to open the lid 4 to the open position (see the lid 4 in dashed lines), and feeds detergents into the detergent supply path 45 from the opening part 6. In other words, the opening part 6 is a feeding port used for feeding detergents. Furthermore, the detergents here contain at least one of general detergent, softener and bleach. The detergents fed into the detergent supply path 45 fall in the detergent supply path 45 and pass through the first opening 43, and are dissolved in water accumulated in the washing tank 33. Furthermore, when the rotary wing 39 rotates, water and detergents accumulated in the washing tank 33 are pressed into the first opening 43 by the pumping vanes 39B of the rotary wing 39, detergents remained in the detergent supply path 45 are dissolved while rising, and wet laundry in washing tank 33 from the second opening 44. Consequently, washing of laundry is performed by using detergents.

In the washing machine 30 including the component 2, when it is intended to further open the fully opened lid 4, the lid 4 can be prevented from being damaged since the shaft 15 is naturally pulled out of the hole 10.

In addition, the component 2 and the pumping pipeline 40 can also function as a baffle for stirring laundry inside the washing tank 33 when the washing tank 33 rotates.

A case that the present disclosure is implemented for the washing machine 30 is described hereinabove, but the present disclosure is not limited thereto. As long as the lid is mounted at the opening part in a free rotation manner, the opening and closing structure 1 of the present disclosure can be used.

Furthermore, the present disclosure is not limited to the embodiments described above, and various modifications can be made within the scope of the claims.

### Description of Reference Signs

1: Opening and closing structure; 2: Component; 3: Supporting body; 4: Lid; 6: Opening part; 10: Hole; 11: Recess; 14: Elastic deformation part; 15: Shaft; 16: Pin; 21: Slit; 30: Washing machine.

## Claims

1. An opening and closing structure, comprising:
a supporting body, which is formed with an opening part;
a lid, which is supported by the supporting body in a free rotation manner, and is capable of being opened and closed between an open position at which the opening part is opened and a closed position at which the opening part is closed;
an elastic deformation part, which forms a rotation center and a periphery of the lid and has flexibility;
a shaft, which is provided on one of the supporting body and the elastic deformation part, and is formed as the rotation center of the lid;
a hole, which is provided on the other of the supporting body and the elastic deformation part which is not provided with the shaft, and is insertable by the shaft;
a pin, which is provided on one of the supporting body and the elastic deformation part; and
a recess, which is provided on the other of the supporting body and the elastic deformation part which is not provided with the pin, and is receivable to the pin with a clearance during opening and closing of the lid,
wherein the recess gradually becomes shallower as the lid goes from the open position to an opposite side of the closed position, so as to push the pin out.

2. The opening and closing structure according to claim 1, comprising a slit, which is formed at the lid and is configured to bend the elastic deformation part.

3. A component, comprising the opening and closing structure of claim 1 or 2.

4. A washing machine, comprising the component of claim 3,
wherein the opening part is a feeding port for feeding any of detergent, softener and bleach.
